# EUROPEAN PATENT SPECIFICATION

(11) **EP 2 138 919 B1**
(45) Date of publication and mention of the grant of the patent: **25.12.2013**
(21) Application number: 08159237.0
(22) Date of filing: 27.06.2008
(51) Int. Cl.: G05B 19/418, G01D 11/24, G01D 9/00

(54) **Wireless field device and method to configure same**
Kabellose Feldvorrichtung und Konfigurationsverfahren dafür
Dispositif de terrain sans fil et son procédé de configuration

(43) Date of publication of application: 30.12.2009
(73) Proprietor: ABB Research Ltd., 8050 Zürich (CH)
(72) Inventor: Balgård, Lennart, 732 32 Arboga (SE); Lennvall, Tomas, 722 21 Västerås (SE)
(74) Representative: Kock, Ina

(56) References cited:
- WO-A-2006/053211
- US-A1- 2005 289 276
- US-A1- 2006 092 039

## Description

### TECHNICAL FIELD.

The present invention is concerned with wireless communication with field devices using wireless transceivers. In particular it is concerned with configuration of wireless field devices in a distributed control system.

### BACKGROUND ART

In distributed systems with many field devices for interaction with eg an industrial plant or a power plant it is common that each field device needs setup data or configuration data for a sensor and/or actuator comprised in the field device during the commissioning of the system. If a field device must be replaced the new field device needs a copy of this configuration data that was configured during the commissioning of the system.

In an industrial installation a distributed control system (DCS) or an industrial control system may be equipped with a large number of field devices. Usually such an industrial installation has one or more control rooms and a computer system which are connected by one or more data networks, such as buses or fieldbuses the field devices. The data network may comprise both wired and wireless links. Field devices may include various types of sensor instrument such as vibration sensors, pressure sensors, temperature gauges, as well as devices that include an actuator such as a valve actuator, a solenoid, a breaker or isolator or on/off switch and the like. Each field device needs to be configured suitably to carry out the chosen function of a individual device. Each field device at a specific location is usually given an identity in the control system or DCS. A wireless field device may also have an identity in a wireless network.

Common methods for entering the setup data include use of an Human machine Interface (HMI) on the field device or to connect a laptop pc, whereupon the configuration data may be entered and sent to the field device. However when replacing a device, it is normally not possible to read a copy of the configuration data setup during commissioning from a non-working device. Using the correct setup data is particularly important in wireless networks where a new device needs to act (function) exactly the same as the old device to be accepted without reconfiguring the network.

IEEE 1451 is a standard for transducer interfaces. A part of this standard is the definition of Transducer Electronic Data Sheets (TEDS). The TEDS is a memory device attached to the transducer, which stores transducer identification, calibration, correction data, measurement range, and manufacture-related information, etc. This simplifies initial configuration or subsequent replacement of a sensor by retaining in the TEDS memory device information about the sensor type so that a new sensor may be interrogated to give its transducer identification, calibration, correction data etc. as supplied by a manufacturer. The TEDS may also include information in respect of a specific device at.a specific location such as an application specific transducer name. However a wireless field device comprising a sensor and/or actuator during commissioning, maintenance or replacement of the field device may also require configuration with information in order for the field device to access the wireless network.

US 2006/0092039 discloses a field device with a wireless radio transmitter comprised in a RF unit, and a power supply block for supplying electric power to the RF unit. The RF unit and the power supply block have modular configurations whereby these blocks can be removed in part or in whole.

US 2005/0289276 discloses a field device provided with a wireless communication module. The wireless communication module may be removable whereby such module is only coupled to those field devices in which wireless communication is desired.

WO 2006/053211 discloses a handheld field maintenance tool for communication with field devices. The field maintenance tool comprises an RF communication module for wireless communication with the field devices, and a removable memory module for storing calibration and configuration information of the same.

### SUMMARY OF THE INVENTION

The aim of the present invention is to remedy one or more of the above mentioned problems. This and other aims are obtained by a device characterised by the claims.

In a first aspect of the invention a field device is disclosed which is connected to a distributed industrial control system or DCS arranged with a wireless network for communication of process data or control information, said field device comprising at least one a sensor and/or an actuator, a wireless radio transmitter, a memory storage device and a first part for mounting said field device on an equipment or a structure, wherein said sensor and said memory storage device are arranged in said first part and that said wireless radio transmitter is arranged in a second part of said field device which is arranged detachable from said first part.

According to another embodiment of the present invention, a field device is disclosed which is arranged such the memory storage device of the first part of the field device is arranged for storing setup data for said field device.

According to another embodiment of the present invention, a field device is disclosed in which the setup data stored in the memory storage device comprises information to identify said field device as a node of said wireless network connected to said control system.

According to another embodiment of the present invention, a field device is disclosed in which the second part of said field device is arranged with a battery or other independent power source for powering at least said wireless radio transmitter.

According to another embodiment of the present invention, a field device is disclosed in which the base is arranged with a device for fixing the first part of said field device to an equipment or a structure.

According to another embodiment of the present invention, a field device is disclosed in which the base is arranged with a location device or means for identification.

According to another embodiment of the present invention, a field device is disclosed in which the second part of said field device detachable from the base is arranged with an antennae directed in a predetermined direction.

According to another embodiment of the present invention, a field device is disclosed in which the field device further comprises an actuator.

In a second aspect of the invention a method for is disclosed for configuring a field device in a distributed industrial control system DCS arranged with a wireless network for communication of process data or control information, said field device comprising a sensor and/or an actuator), a wireless radio transmitter, a memory storage device and a first part for mounting said field device on an equipment or a structure, the method comprising configuring said field device and saving the configuration data in said memory storage device, detaching a second part of said field device which is arranged detachable from said first base part, and subsequently connecting the second part of said field device comprising said wireless radio transmitter to said first part and reading in the second part configuration data stored in said memory storage device in said first part.

According to another embodiment of the present invention, a method for configuring a field device is disclosed which includes connecting the second part of said field device to said first part, the second part comprising a new or charged battery.

According to another embodiment of the present invention, a method for configuring a field device is disclosed which includes connecting a second part which is not the same physical unit as the previous second part and reading in the second part configuration data stored in said memory storage device in said first part.

According to another embodiment of the present invention, a method for configuring a field device is disclosed which includes configuring said field device such that the configuration data comprises information identifying said field device as a node of said wireless network connected to said control system or DCS.

According to another embodiment of the present invention, a method for configuring a field device is disclosed which includes configuring said field device such that the configuration data comprises information identifying a specific location where said field device is located.

According to another embodiment of the present invention, a method for configuring a field device is disclosed which includes configuring said field device such that the configuration data comprises information identifying a specific field device and a location where said field device is located.

According to another embodiment of the present invention, a method for configuring a field device is disclosed which includes configuring said field device such that the configuration data comprises information identifying a specific role name or system identity of said field device.

According to another embodiment of the present invention, a method for configuring a field device is disclosed which includes configuring said field device such that the configuration data comprises information dependent on a calibration or adjustment of said field device.

In another aspect of the invention use of the device in a distributed industrial control system arranged with a wireless network for communication of process data or control information is disclosed in which said control system comprises at least one said field device, which said field device is arranged in at least two parts, and wherein a sensor and a memory storage device are arranged included in a first part forming a base of said field device and that a wireless radio transmitter is arranged in a second part of said field device which second part is arranged detachable from said first base part.

According to one aspect of the invention, a field device is provided that is formed in at least two parts and which comprises a base part that is left in place when a second part of the device is removed. The base part contains a non-volatile memory for the setup and configuration data. When installing a new device, that is replacing the old second part of the field device, the new second part of the field device can read all setup and configuration data from the base part.

During the initial system commissioning all the base parts of a plurality of new field devices could be preloaded with individual setup data to speed up the mounting or commissioning procedure on site. The base part contains a sensor or transducer. The base part may also contain a sensor or transducer that would need a special mounting procedure to for calibration or after replacement. External wiring connections may also be part of the base part.

The nature of the mounting or fastening of the field device on mounted an equipment or a structure may be critical to the measurement and/or other function of the field device. For example a vibration sensor mounted on a pump or motor requires a permanent type of attachment to the motor or structure and such as sensor may require calibration.

In case of battery powered devices, the power could be disconnected if the device is not mounted on the base plate, to save battery life before installation

The mechanical interface between the base part and the rest of the field device may also be used as a temporary connection point to eg. a laptop pc for development, software download and maintenance work etc. before installation.

### BRIEF DESCRIPTION OF THE DRAWINGS

A more complete understanding of the method and system of the present invention may be had by reference to the following detailed description when taken in conjunction with the accompanying drawings wherein:
Figure 1a shows a schematic block diagram of a field device comprising two parts such that a second part may be detached from a first part, according to an embodiment of the invention;
Figure 1b shows a schematic block diagram of a field device comprising two parts showing components included in a first part and a second part;
Figure 1c shows a schematic block diagram of a field device comprising two parts of which a first part is arranged with a location device according to another embodiment of the invention;
Figure 2 shows a schematic block diagram of distributed control system (DCS) system including field devices according to another aspect of the invention;
Figure 3 shows a schematic flowchart for a method according to another aspect of the invention for configuration of a field device
Figure 4 shows a schematic flowchart for a method according to another embodiment of the invention for for operating or configuring the field device after changing the second part 2 of the field device

### DESCRIPTION OF THE PREFERRED EMBODIMENTS

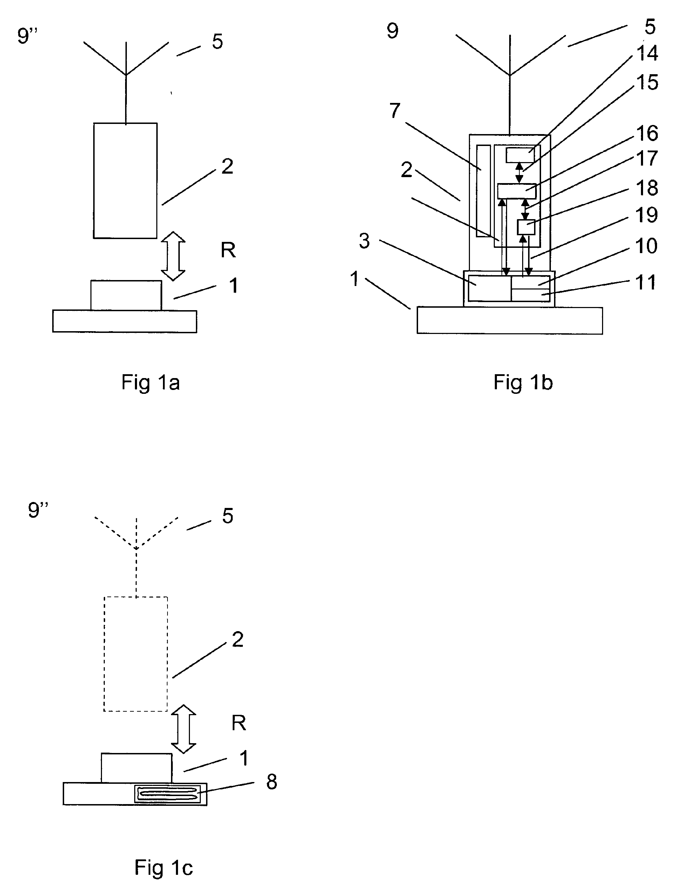

Figure 1a shows as an exemplary practice of an embodiment of the present invention a field device that comprises a base part that is left in place when a second part of the device is removed. Fig 1a shows a field device 9" arranged as first part 1, and a second part 2. The second part 2 is arranged with an antenna 5. The second part 2 is detachable from the first part 1 as indicated by the arrow R.

Figure 1b shows a more detailed block diagram of the field device 9". It shows a base part 1 arranged with a memory storage device 3, in the form of a non volatile memory. Base part 1 also includes a sensor 10 or transducer, and may also include an actuator 11. The base part may be arranged with a mechanical or galvanic connection interface.

The base part, first part 1, contains a non-volatile memory for the setup and configuration data. The base part may be left in place when a field device has to be replaced. When installing a new field device, it is only necessary to install a second part which replaces the previous second part of the field device. Once connected, the new second part of the field device can read all setup and configuration data from the non-volatile memory in the base part 1.

Figure 1b shows the first part 1 connected to a second part 2. The figure shows the second part 2 to include an antenna 5, and a radio transceiver or transmitter 14. The figure also shows a battery 7 arranged to power at least the radio transmitter. A processor 16 and an Input/Output (I/O) interface 19 are shown. The transmitter 14, processor 16 may be arranged on a common circuit board. A data connection 19 is arranged between the processor 16 and a sensor 10 and/or actuator 11 by means of the I/O interface 18, for example as a serial data connection. A data connection 17 is arranged between the I/O interface 18 and the processor 16. The processor 16 sends data to the wireless radio transmitter 14 for transmission. The antenna may be positioned in a predetermined direction to optimize wireless communication with other nodes and/or the DCS.

The processor in the second part 2 may read the configuration data stored in the memory storage device 3 by means of a separate interface or by means of a common interface with the I/O interface 18.

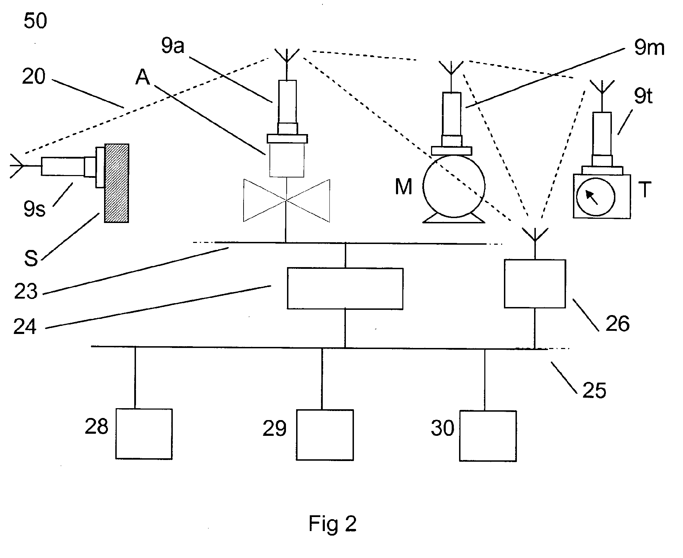

Figure 2 shows a control system with a wireless data network to which a plurality of field devices 9a, 9m, 9s, 9t are wirelessly connected. The figure shows a distributed control system 50 with a wireless data network 20, a wired fieldbus 23 and a wireless router or gateway 26. The DCS may have one or more wired data networks 25 to which may be connected an industrial controller 24, a central control system computer 28, an operator workstation 29 and an engineering workstation 30. Equipment and monitoring and/or control equipment such as the valve A may be connected, eg by a fieldbus 23 directly to a control system computer 28 or connected via an industrial controller 24 to a control system or DCS.

Figure 2 also shows a first field device 9s arranged mounted on a structure such as a stand, a wall or framework or similar in a process installation. A second field device 9a is arranged as an actuator or valve. A third field device 9m is arranged mounted on an electric motor M and the field device 9m may be implemented as a wireless vibration sensor. A fourth wireless field device 9t is shown arranged together with a temperature measuring instrument T. Wireless communication from the field devices to the DCS may be carried out by the field devices communicating directly with the DCS or other control system or communicating via a hub or gateway 26, or by sending transmissions via other field devices such as may be done with a wireless a sensor network WSN.

During the initial system commissioning a field device 9 configured by, for example, entering the setup data. This may be carried out on site by connecting to a Human machine Interface (HMI) on the field device or by connecting a portable computer such as a laptop pc, whereupon the necessary configuration data may be entered and sent to the field device, where it is stored (written) to the memory storage device 3 in the base part 1. Configuration information may comprise:
a name of the field device at a specific location, an application specific transducer name, or an identity of the field device at a specific location in the DCS control system;
a name, identity, address or network identity for the wireless radio network eg 20 that the field device at a specific location shall be connected to;
configuration data of a calibration nature to setup a specific sensor, eg a vibration sensor at the specific location with parameters or other information dependent on the actual output specific sensor in the field device.

At any time after initial configuration, the second part 2 may be detached from the first part 1 (base) at a specific location. A second part with, for example, a new battery may be attached to the first part at the specific location. In operation, the processor of the second part then reads the configuration data stored in the memory 3 in the first part (base) that was left at the specific location and the field device comprising the original first part a second part connected to it functions in the same way as the original field device at that specific location.

The first part 1, the base, is left in place after the second part is detached. The first part may be arranged with a identification device or a location device 8. This may take the form of an RFID (Radio Frequency IDentification) tag or badge. The location device may be arranged for optical reading, such as a machine readable code or a barcode. This is an advantage for locating field devices or sensors arranged in an industrial installation in the oil and gas industry, or in a paper mill, in which there may be hundreds or even thousands of separate devices.

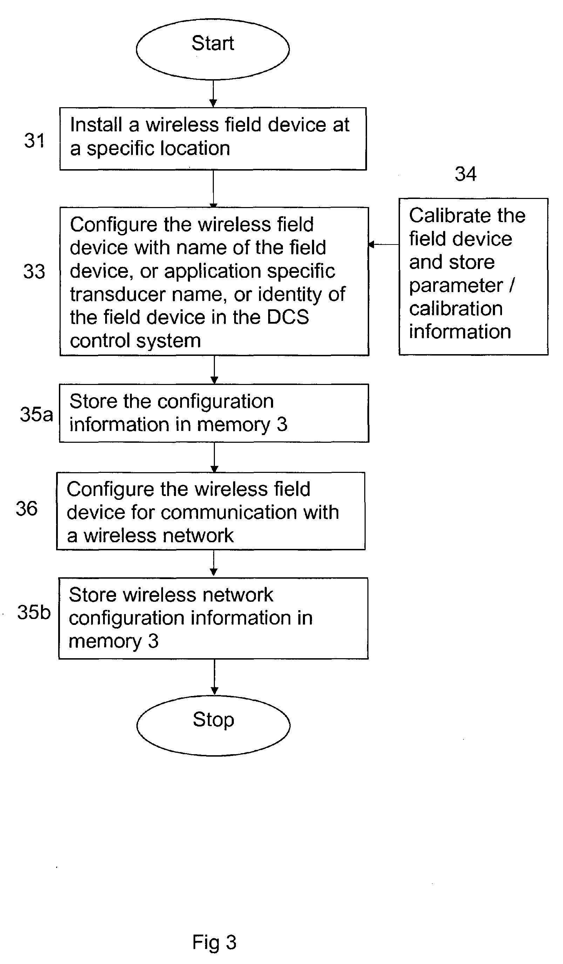

Figure 3 shows a schematic flowchart for configuration of field device. It shows:
31 Install a wireless field device at a specific location, that is, to a location with a known name or identity in the DCS;
33 Configure the wireless field device with name of the field device, or application specific transducer name, or identity of the field device in the DCS control system;
34 Calibrate the field device and store parameter / calibration information, when necessary store calibration information, adjustments, set points for the field device;
35a Store the configuration information in memory 3, the base of the field device;
36 Configure the wireless field device for communication with a wireless network with a wireless identity, wireless network address etc.;
35b Store the wireless configuration information in memory 3 at the same time as 35a or else later.

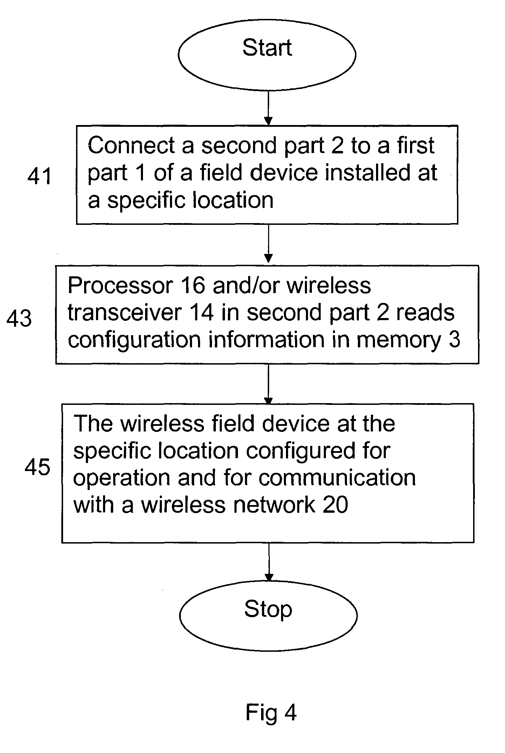

Figure 4 shows a schematic flowchart for operating or configuring the field device after changing the second part 2 of the field device. This may be for a battery exchange or eg for maintenance reasons. It shows:
41 Connect a second part 2 to a first part 1 of a field device installed at a specific location;
43 Configuration information for the field device at the specific location is read by processor 16 and/or wireless transceiver 14 in second part 2 from memory 3 storage in first part 1;
45 The wireless field device at the specific location is now configured for operation and for communication with a wireless network 20

In a preferred embodiment of the invention a wireless field device in the form of a vibration sensor (9m) is provided.
A small, autonomous sensor unit 9m is mounted onto a motor, for example an AC motor. The unit comprises a vibration transducer element (accelerometer), analogue filtering, A/D conversion, temporary data storage and wireless communication to a computer of a DCS. The DCS computer performs the necessary data analysis and makes the data available to potential users. Vibration is, however, a most demanding phenomenon to monitor with wireless communication because of the large amount of data (e.g. 4 or 8kB of data) that is needed for the vibration analysis. Most Wireless Sensor Networks (WSN) are used to collect a couple of bytes (e.g. a temperature value) from each node.

The sensor unit may be implemented using a processor such as a MSP430F427 microcontroller (MCU) from Texas Instruments. This processor requires low power, has advanced 16 bit sigma-delta A/D converter and an internal 32kB flash memory. The low power results in long battery life. The advanced A/D converter of this processor is used to sample the vibration data with required resolution and sample rate. The flash memory provides for permanent storage of program code and for temporary storage of sampled data.

The above MCU processor may be arranged to use an external 32 kHz real time clock arranged such that the processor is in deep sleep (Low Power Mode) most of the time. The clock wakes up the MCU typically once a week (the interval may be configured wirelessly) to sample vibration data. Before sampling, the signal may be filtered in advanced analogue filters adapted to the vibration analysis. The sampled data is first temporarily stored in the MCU flash and then sent over the wireless network using the low throughput that is possible in a typical wireless mesh sensor network. A suitable vibration sensor/transducer or accelerometer is preferably of the MEMS-based piezo-resistive bridge transducer.A pcb-mounted antenna (pcb - printed circuit board) may provide a low cost solution. A ceramic pcb-mounted antenna has been shown to provide a wireless communication range of >25m sensor to sensor in a wireless sensor network.

The radio communication to and from the sensor 9m may be handled by a low power transceiver such as a DN2040 transceiver from Dust Networks. This is a system-on-chip transceiver designed for low-power applications. The DN2040 contains a dedicated communication processor, a flash memory and a radio transceiver. The DN2040 may be used with the Time Synchronous Mesh Protocol (TSMP) developed by Dust. The sensor may also be arranged to operate with a WirelessHART standard that is also based on TSMP.

The wireless field device 9 may be arranged a node of a wireless LAN, and/or may be another kind of wireless node, running any radio protocol suitable for an industrial milieu, such as any standard issued by the Bluetooth Special Interest Group (SIG), any variation of IEEE-802.11, WiFi, Ultra Wide Band (UWB), ZigBee or IEEE-802.15.4, IEEE-802.13 or equivalent, a WirelessHART standard, or similar.

It should be noted that while the above describes exemplifying embodiments of the invention, there are several variations and modifications which may be made to the disclosed solution without departing from the scope of the present invention as defined in the appended claims.

## Claims

1. A wireless field device (9, 9a, 9s, 9t) connected to a distributed industrial control system (50) arranged with a wireless network (20) for communication of process data or control information, said field device comprising at least a sensor (10) and/or an actuator (11), a wireless radio transmitter (14), a memory storage device (3), a processor (16), an I/O interface (18) and a first part (1) for mounting said field device on an equipment (M) or a structure (S), wherein said sensor (10) and said memory storage device (3) are arranged in said first part (1) and that said wireless radio transmitter is arranged in a second part (2) of said field device which is arranged detachable from said first part, **characterised in that** said memory storage device (3) is arranged for storing setup data for said field device and the said processor (16) is arranged in said second part to read the stored setup data through said I/O interface (18).

2. A device according to claim 1, **characterised in that** said memory storage device (3) includes a non-volatile memory.

3. A device according to claim 1 or 2, **characterised in that** the setup data stored in the memory storage device (3) comprises information to identify said field device as a node of said wireless network (20) connected to said control system (50).

4. A device according to claim 1, **characterised in that** the second part (2) of said field device is arranged with a battery (7) or other independent power source for powering at least said wireless radio transmitter (14).

5. A device according to any one of the previous claims, **characterised in that** the base is arranged with a device for fixing the first part (1) of said field device to an equipment (A,
T, M) or a structure (S).

6. A device according to one of any previous claims, **characterised in that** the base is arranged with a location device (8).

7. A device according to any one of the previous claims, **characterised in that** the second part (2) of said field device detachable from the base is arranged with an antennae (5) directed in a predetermined direction.

8. A device according to any one of the previous claims, **characterised in that** said field device further comprises an actuator (11).

9. A method for configuring a wireless field device (9a, 9m, 9s, 9t) in a distributed industrial control system (50) arranged with a wireless network (20) for communication of process data or control information, said field device comprising a sensor (10) and/or an actuator (11), a wireless radio transmitter (14), a memory storage device (3), a processor (16), an I/O interface (18) and a first part (1) for mounting said field device on an equipment (M) or a structure (S), the method comprising steps of arranging said sensor (10) and said memory storage device (3) in said first part (1), arranging said wireless radio transmitter (14) in a second part (2) of said field device, wherein said second part (2) is detachable from the first part, detaching (R) said second part (2) from said first part, **characterised in that** the method further comprising steps of configuring (40) said field device and saving (41) the configuration data in said memory storage device, connecting the second part (2) of said field device comprising said wireless radio transmitter to said first part (1) and, reading in the second part (2) configuration data stored in said memory storage device (3) in said first part (1) through said I/O interface.

10. A method according to claim 9, **characterised by** connecting the second part (2) of said field device to said first part (1), the second part (2) comprising a new or charged battery.

11. A method according to claim 9, **characterised by** connecting a second part (2) which is not the same physical unit as the previous second part (2) and reading in the second part configuration data stored in said memory storage device (3) in said first part.

12. A method according to claim 9, **characterised by** configuring said field device such that the configuration data comprises information identifying said field device as a node of said wireless network (20) connected to said control system (50).

13. A method according to claim 9, **characterised by** configuring said field device such that the configuration data comprises information identifying a specific location where said field device is located.

14. A method according to claim 9, **characterised by** configuring said field device such that the configuration data comprises information identifying a specific field device and a location where said field device is located.

15. A method according to claim 9, **characterised by** configuring said field device such that the configuration data comprises information identifying a specific role name or system identity of said field device.

16. A method according to claim 9, **characterised by** configuring said field device such that the configuration data comprises information dependent on a calibration of said field device.

17. Use of a wireless field device (9a, 9m, 9s, 9t) according to any of claims 1-8 in a distributed industrial control system (50) arranged with a wireless network (20) for communication of process data or control information.

18. A distributed industrial control system (50) arranged with a wireless network (20) for communication of process data or control information, comprising at least one wireless filed device according to any of claims 1-8.

19. A system according to claim 18, **characterised by** the wireless network (20) is arranged compatible with a WirelesHART standard.

20. A system according to claim 18, **characterised in that** the system comprises at least one said field device arranged to carry out the function of a vibration sensor for sensing vibration of a machine.

21. A system according to claim 18, **characterised in that** the system comprises at least one said field device which is any from the group of a vibration sensor, a transducer, an actuator (A) a temperature sensor (T).

## Patentansprüche

1. Kabellose Feldvorrichtung (9, 9a, 9s, 9t), die mit einem verteilten industriellen Steuersystem (50) verbunden ist, das mit einem drahtlosen Netzwerk (20) zur Kommunikation von Prozessdaten oder Steuerinformationen ausgestattet ist, wobei die Feldvorrichtung mindestens einen Sensor (10) und/oder einen Aktor (11), einen drahtlosen Funksender (14), eine Speichervorrichtung (3), einen Prozessor (16), eine E-/A-Schnittstelle (18) und einen ersten Teil (1) zum Befestigen der Feldvorrichtung an einer Einrichtung (M) oder einer Struktur (S) aufweist, wobei der Sensor (10) und die Speichervorrichtung (3) im ersten Teil (1) angeordnet sind, und der drahtlose Funksender in einem zweiten Teil (2) der Feldvorrichtung angeordnet ist, der so ausgelegt ist, das er vom ersten Teil abgenommen werden kann, **dadurch gekennzeichnet, dass** die Speichervorrichtung (3) zum Speichern von Setup-Daten für die Feldvorrichtung ausgelegt ist, und der Prozessor (16) im zweiten Teil angeordnet ist, um die gespeicherten Setup-Daten durch die E-/A-Schnittstelle (18) auszulesen.

2. Vorrichtung nach Anspruch 1, **dadurch gekennzeichnet, dass** die Speichervorrichtung (3) einen nichtflüchtigen Speicher aufweist.

3. Vorrichtung nach Anspruch 1 oder 2, **dadurch gekennzeichnet, dass** die Setup-Daten, die in der Speichervorrichtung (3) gespeichert sind, Informationen zum Identifizieren der Feldvorrichtung als einen Knoten des drahtlosen Netzwerks (20) aufweisen, das mit dem Steuersystem (50) verbunden ist.

4. Vorrichtung nach Anspruch 1, **dadurch gekennzeichnet, dass** der zweite Teil (2) der Feldvorrichtung mit einer Batterie (7) oder einer anderen unabhängigen Leistungsquelle ausgestattet ist, um mindestens den drahtlosen Funksender (14) mit Leistung zu versorgen.

5. Vorrichtung nach einem der vorhergehenden Ansprüche, **dadurch gekennzeichnet, dass** die Basis mit einer Vorrichtung zum Fixieren des ersten Teils (1) der Feldvorrichtung an einer Einrichtung (A, T, M) oder einer Struktur (S) ausgestattet ist.

6. Vorrichtung nach einem der vorhergehenden Ansprüche, **dadurch gekennzeichnet, dass** die Basis mit einer Ortsbestimmungsvorrichtung (8) ausgestattet ist.

7. Vorrichtung nach einem der vorhergehenden Ansprüche, **dadurch gekennzeichnet, dass** der zweite Teil (2) der Feldvorrichtung, der von der Basis abgenommen werden kann, mit einer Antenne (5) ausgestattet ist, die in eine vorbestimmte Richtung gerichtet ist.

8. Vorrichtung nach einem der vorhergehenden Ansprüche, **dadurch gekennzeichnet, dass** die Feldvorrichtung ferner einen Aktor (11) aufweist.

9. Verfahren zur Konfiguration einer kabellosen Feldvorrichtung (9a, 9m, 9s, 9t) in einem verteilten industriellen Steuersystem (50), das mit einem drahtlosen Netzwerk (20) zur Kommunikation von Prozessdaten oder Steuerinformationen ausgestattet ist, wobei die Feldvorrichtung einen Sensor (10) und/oder einen Aktor (11), einen drahtlosen Funksender (14), eine Speichervorrichtung (3), einen Prozessor (16), eine E-/A-Schnittstelle (18) und einen ersten Teil (1) zum Befestigen der Feldvorrichtung an einer Einrichtung (M) oder einer Struktur (S) aufweist, wobei das Verfahren die Schritte des Anordnens des Sensors (10) und der Speichervorrichtung (3) im ersten Teil (1), Anordnens des drahtlosen Funksenders (14) in einem zweiten Teil (2) der Feldvorrichtung, wobei der zweite Teil (2) vom ersten Teil abgenommen werden kann, Abnehmens (R) des zweiten Teils (2) vom ersten Teil aufweist, **dadurch gekennzeichnet, dass** das Verfahren ferner die Schritte des Konfigurierens (40) der Feldvorrichtung und Speicherns (41) der Konfigurationsdaten in der Speichervorrichtung, Verbindens des zweiten Teils (2) der Feldvorrichtung, der den drahtlosen Funksender aufweist, mit dem ersten Teil (1) und Auslesens im zweiten Teil (2) von Konfigurationsdaten, die in der Speichervorrichtung (3) im ersten Teil (1) gespeichert sind, durch die E-/A-Schnittstelle aufweist.

10. Verfahren nach Anspruch 9, **gekennzeichnet durch** Verbinden des zweiten Teils (2) der Feldvorrichtung mit dem ersten Teil (1), wobei der zweite Teil (2) eine neue oder geladene Batterie aufweist.

11. Verfahren nach Anspruch 9, **gekennzeichnet durch** Anschließen eines zweiten Teils (2), bei dem es sich nicht um die gleiche physische Einheit wie den vorherigen zweiten Teil (2) handelt, und Auslesen im zweiten Teil von Konfigurationsdaten, die in der Speichervorrichtung (3) im ersten Teil gespeichert sind.

12. Verfahren nach Anspruch 9, **gekennzeichnet durch** derartiges Konfigurieren der Feldvorrichtung, dass die Konfigurationsdaten Informationen aufweisen, welche die Feldvorrichtung als einen Knoten des drahtlosen Netzwerks (20) identifizieren, das mit dem Steuersystem (50) verbunden ist.

13. Verfahren nach Anspruch 9, **gekennzeichnet durch** derartiges Konfigurieren der Feldvorrichtung, dass die Konfigurationsdaten Informationen aufweisen, die einen spezifischen Standort identifizieren, an dem sich die Feldvorrichtung befindet.

14. Verfahren nach Anspruch 9, **gekennzeichnet durch** derartiges Konfigurieren der Feldvorrichtung, dass die Konfigurationsdaten Informationen aufweisen, die eine spezifische Feldvorrichtung und einen Standort identifizieren, an dem sich die Feldvorrichtung befindet.

15. Verfahren nach Anspruch 9, **gekennzeichnet durch** derartiges Konfigurieren der Feldvorrichtung, dass die Konfigurationsdaten Informationen aufweisen, die eine spezifische Funktionsbezeichnung oder Systemkennung der Feldvorrichtung identifizieren.

16. Verfahren nach Anspruch 9, **gekennzeichnet durch** derartiges Konfigurieren der Feldvorrichtung, dass die Konfigurationsdaten Informationen aufweisen, die von einer Kalibrierung der Feldvorrichtung abhängen.

17. Verwendung einer kabellosen Feldvorrichtung (9a, 9m, 9s, 9t) nach einem der Ansprüche 1 bis 8 in einem verteilten industriellen Steuersystem (50), das mit einem drahtlosen Netzwerk (20) zur Kommunikation von Prozessdaten oder Steuerinformationen ausgestattet ist.

18. Verteiltes industrielles Steuersystem (50), das mit einem drahtlosen Netzwerk (20) zur Kommunikation von Prozessdaten oder Steuerinformationen ausgestattet ist und mindestens eine kabellose Feldvorrichtung nach einem der Ansprüche 1 bis 8 aufweist.

19. System nach Anspruch 18, **dadurch gekennzeichnet, dass** das drahtlose Netzwerk (20) so ausgelegt ist, dass es mit einem WirelessHART-Standard kompatibel ist.

20. System nach Anspruch 18, **dadurch gekennzeichnet, dass** das System mindestens eine Feldvorrichtung aufweist, die so ausgelegt ist, dass sie die Funktion eines Vibrationssensors zum Erfassen von Vibration einer Maschine ausführt.

21. System nach Anspruch 18, **dadurch gekennzeichnet, dass** das System mindestens eine Feldvorrichtung aufweist, bei welcher es sich um einen aus der Gruppe von einem Vibrationssensor, einem Wandler, einem Aktor (A), einem Temperatursensor (T) handelt.

## Revendications

1. Dispositif de terrain sans fil (9, 9a, 9s, 9t) connecté à un système de commande industrielle distribué (50) comprenant un réseau sans fil (20) pour une communication de données de processus ou d'informations de commande, ledit dispositif de terrain comportant au moins un capteur (10) et/ou un actionneur (11), un émetteur radio sans fil (14), un dispositif de stockage (3), un processeur (16), une interface d'E/S (18) et une première partie (1) destinée à monter ledit dispositif de terrain sur un équipement (M) ou une structure (S), ledit capteur (10) et ledit dispositif de stockage (3) étant placés dans ladite première partie (1) et ce dit émetteur radio sans fil étant placé dans une deuxième partie (2) dudit dispositif de terrain qui est détachable de ladite première partie, **caractérisé en ce que** ledit dispositif de stockage (3) est conçu pour stocker des données de configuration pour ledit dispositif de terrain et **en ce que** ledit processeur (16) est placé dans ladite deuxième partie pour lire les données de configuration stockées par l'intermédiaire de ladite interface d'E/S (18).

2. Dispositif selon la revendication 1, **caractérisé en ce que** ledit dispositif de stockage (3) comprend une mémoire non volatile.

3. Dispositif selon la revendication 1 ou 2, **caractérisé en ce que** les données de configuration stockées dans le dispositif de stockage (3) contiennent des informations permettant d'identifier ledit dispositif de terrain comme un noeud dudit réseau sans fil (20) connecté au dit système de commande (50).

4. Dispositif selon la revendication 1, **caractérisé en ce que** la deuxième partie (2) dudit dispositif de terrain comprend une batterie (7) ou une autre source d'alimentation indépendante destinée à alimenter au moins ledit émetteur radio sans fil (14).

5. Dispositif selon l'une quelconque des revendications précédentes, **caractérisé en ce que** la base comprend un dispositif destiné à fixer la première partie (1) dudit dispositif de terrain à un équipement (A, T, M) ou à une structure (S).

6. Dispositif selon l'une quelconque des revendications précédentes, **caractérisé en ce que** la base comprend un dispositif d'emplacement (8).

7. Dispositif selon l'une quelconque des revendications précédentes, **caractérisé en ce que** la deuxième partie (2) dudit dispositif de terrain détachable de la base comporte une antenne (5) orientée dans une direction prédéterminée.

8. Dispositif selon l'une quelconque des revendications précédentes, **caractérisé en ce que** ledit dispositif de terrain comprend en outre un actionneur (11).

9. Procédé permettant de configurer un dispositif de terrain sans fil (9a, 9m, 9s, 9t) dans un système de commande industrielle distribué (50) comprenant un réseau sans fil (20) pour une communication de données de processus ou d'informations de commande, ledit dispositif de terrain comportant un capteur (10) et/ou un actionneur (11), un émetteur radio sans fil (14), un dispositif de stockage (3), un processeur (16), une interface d'E/S (18) et une première partie (1) destinée à monter ledit dispositif de terrain sur un équipement (M) ou une structure (S), ledit procédé comprenant les étapes consistant à placer ledit capteur (10) et ledit dispositif de stockage (3) dans ladite première partie (1), à placer ledit émetteur radio sans fil (14) dans une deuxième partie (2) dudit dispositif de terrain, ladite deuxième partie (2) étant détachable de la première partie, à détacher (R) ladite deuxième partie (2) de ladite première partie, **caractérisé en ce que** le procédé comprend en outre les étapes consistant à configurer (40) ledit dispositif de terrain et à sauvegarder (41) les données de configuration dans ledit dispositif de stockage, à connecter la deuxième partie (2) dudit dispositif de terrain comportant ledit émetteur radio sans fil à ladite première partie (1) et, à lire dans la deuxième partie (2) les données de configuration stockées dans ledit dispositif de stockage (3) placé dans ladite première partie (1) par l'intermédiaire de ladite interface d'E/S.

10. Procédé selon la revendication 9, **caractérisé par** l'étape consistant à connecter la deuxième partie (2) dudit dispositif de terrain à ladite première partie (1), la deuxième partie (2) comprenant une nouvelle batterie ou une batterie chargée.

11. Procédé selon la revendication 9, **caractérisé par** l'étape consistant à connecter une deuxième partie (2) qui n'est pas la même unité physique comme la deuxième partie (2) précédente et à lire dans la deuxième partie les données de configuration stockées dans ledit dispositif de stockage (3) placé dans ladite première partie.

12. Procédé selon la revendication 9, **caractérisé par** l'étape consistant à configurer ledit dispositif de terrain de telle sorte que les données de configuration comprennent des informations identifiant ledit dispositif de terrain comme un noeud dudit réseau sans fil (20) connecté au dit système de commande (50).

13. Procédé selon la revendication 9, **caractérisé par** l'étape consistant à configurer ledit dispositif de terrain de telle sorte que les données de configuration comprennent des informations identifiant un emplacement spécifique où ledit dispositif de terrain est situé.

14. Procédé selon la revendication 9, **caractérisé par** l'étape consistant à configurer ledit dispositif de terrain de telle sorte que les données de configuration comprennent des informations identifiant un dispositif de terrain spécifique et un emplacement où ledit dispositif de terrain est situé.

15. Procédé selon la revendication 9, **caractérisé par** l'étape consistant à configurer ledit dispositif de terrain de telle sorte que les données de configuration comprennent des informations identifiant un nom de rôle ou une identité système spécifique dudit dispositif de terrain.

16. Procédé selon la revendication 9, **caractérisé par** l'étape consistant à configurer ledit dispositif de terrain de telle sorte que les données de configuration comprennent des informations dépendantes d'un calibrage dudit dispositif de terrain.

17. Utilisation d'un dispositif de terrain sans fil (9a, 9m, 9s, 9t) selon l'une quelconque des revendications 1-8 dans un système de commande industrielle distribué (50) comprenant un réseau sans fil (20) pour une communication de données de processus ou d'informations de commande.

18. Système de commande industrielle distribué (50) comprenant un réseau sans fil (20) pour une communication de données de processus ou d'informations de commande, comportant au moins un dispositif de terrain sans fil selon l'une quelconque des revendications 1-8.

19. Système selon la revendication 18, **caractérisé par le fait que** le réseau sans fil (20) est compatible avec une norme WirelessHART.

20. Système selon la revendication 18, **caractérisé en ce que** le système comprend au moins un dit dispositif de terrain conçu pour exécuter la fonction d'un capteur de vibration destiné à détecter la vibration d'une machine.

21. Système selon la revendication 18, **caractérisé en ce que** le système comprend au moins un dit dispositif de terrain qui est n'importe quel élément parmi le groupe d'un capteur de vibration, d'un transducteur, d'un actionneur (A), d'un capteur de température (T).
